Europäisches Patentamt

(19) European Patent Office

Office européen des brevets

(11) Publication number : **0 405 879 B1**

# (12) EUROPEAN PATENT SPECIFICATION

(45) Date of publication of patent specification :
**15.12.93 Bulletin 93/50**

(51) Int. Cl.⁵ : **C10M 159/24, C07G 17/00**

(21) Application number : **90306909.4**

(22) Date of filing : **25.06.90**

(54) Improved basic calcium sulphonate.

(30) Priority : **26.06.89 GB 8914674**

(43) Date of publication of application :
**02.01.91 Bulletin 91/01**

(45) Publication of the grant of the patent :
**15.12.93 Bulletin 93/50**

(84) Designated Contracting States :
**AT BE CH DE DK ES FR GB GR IT LI LU NL SE**

(56) References cited :
**EP-A- 0 135 920**
**US-A- 4 780 224**

(73) Proprietor : **EXXON CHEMICAL PATENTS INC.**
**200 Park Avenue**
**Florham Park New Jersey 07932 (US)**

(72) Inventor : **Best, David Marshall**
**17 Rue du Lac**
**B-1050 Brussels (BE)**
Inventor : **Fillastre, Pierre Henri**
**No. 1 Rue Prosper Guernet**
**F-76000 Rouen (FR)**
Inventor : **Mathieu, Edouard Manuel**
**10 Rue de la Mare Saint Aignan**
**F-76130 Mon-Saint-Aignan (FR)**

(74) Representative : **Bawden, Peter Charles et al**
**EXXON CHEMICAL LIMITED EXXON**
**CHEMICAL TECHNOLOGY CENTRE PO Box 1**
**Abingdon Oxfordshire OX13 6BB (GB)**

EP 0 405 879 B1

## Description

The present invention relates to basic calcium sulphonate compositions, a method for their preparation and their use in anticorrosion coatings particularly for cavity protection and underbody coating of automobiles to prevent chipping and corrosion.

Basic calcium sulphonates are known in many forms and are commonly used as additives in various lubricant systems and to impart anticorrosion properties to coatings such as temporary and permanent coatings for metals. Many processes have been suggested for the production of the various forms of basic calcium sulphonate the majority of which include carbonation of a reaction mixture containing a sulphonic acid and an excess of calcium oxide or hydroxide frequently in the presence of promoters, alcohols and solvents, the choice inter alia of the reaction conditions, the promoter and the solvent determining the nature of the calcium sulphonate produced.

Basic calcium sulphonate may be in the crystalline or amorphous form. When in the crystalline form it may be vaterite or calcite, as indicated by the infra-red spectrum which shows characteristic absorption at 883 cm$^{-1}$ for the calcite form, at 878 cm$^{-1}$ for the vaterite form, and 862 cm$^{-1}$ for the amorphous form.

Also depending upon the use to which the calcium sulphonate is to be put it may be a thixotropic or a Newtonian material and the manufacturing conditions are adjusted to obtain the desired type of product.

There is extensive patent literature on the production of basic calcium sulphonates. With very few exceptions the materials are described as being produced and used as solutions in oil as is the case in practice. United States Patent No. 3766066 describes the production of solid crystalline calcium sulphonate by precipitation from thixotropic basic calcium sulphonate or by evaporation of solvents at around 300°C, the product being used as a filler and viscosity modifier in coatings, for example, paints. This process involves a special conversion reaction to produce the thixotropic material which according to Column 15, lines 32 to 36, converts the calcium carbonate to crystallites.

The processes described for the production of basic calcium sulphonate use volatile and/or non-volatile solvents during the reaction and they invariably include relatively large amounts of oil or add oil after production of the basic sulphonate to provide an oil solution of the final product. The presence of amounts such as greater than 20 wt% of oil can however have disadvantages particularly where the product is to be used in anticorrosion coatings where the oil can cause sag in the coating upon application due to the long drying time; the oil can also be incompatible with other layers and/or components in the coating systems. As is clear from United States Patent No. 3766066 where solid, oil-free, materials are needed complex techniques for removal of the oil are needed.

Automobile undercoatings typically consist of several layers on a metal, usually phosphorised metal. First the phosphorised metal is painted, it is subsequently coated with a layer of a polyvinyl chloride plastisol, generally applied as a dispersion, which is fused at an elevated temperature to provide a rendered chip resistant coating. Frequently the plastisol is filled with a substantial amount of filler, typically calcium carbonate. Once the polyvinyl chloride layer is applied it may itself be coated with a layer of wax to inhibit decomposition of the polyvinyl chloride and consequential corrosion. There may also be incorporated an anticorrosion material which may be a thixotropic calcium sulphonate, but the calcium sulphonate cannot be incorporated directly into the polyvinyl chloride due to the incompatibility of large amounts of oil and the plasticizer in the polyvinyl chloride plastisol.

The use of corrosion-inhibiting coating compositions, which contain thixotropic, or grease-like or gel-like thixotropic, alkaline earth metal organic sulphonates complexed with alkaline earth metal carbonates, with or without admixture with polymers, resins or waxes, in a carrier or diluent of nonvolatile or volatile (or mixtures of nonvolatile and volatile) hydrocarbons and/or other liquid solvents, is disclosed in U.S. Patents Nos. 3,453,124; 3,492,231; 3,565,672; 3,565,843; 3,661,662; 3,746,643; and 3,816,310; and United Kingdom Patent No. 1,249,144 and various patents referred to in the specifications of such patents. Various of such corrosion-inhibiting compositions are proposed for a variety of purposes, some including automobile and truck body undercoatings, and others for use in other environments. We have found however that these blends are unsatisfactory in that they have inadequate adhesion to metal.

In particular United States Patent No. 3661662 describes using a coating composition which is a solution of polymers of low crystallinity and a thixotropic calcium sulphonate. It is notable that these compositions have relatively low solids contents.

There is therefore a need for a high solids content or 100% solid basic calcium sulphonate which may be incorporated into coating compositions such as wax based cavity and underbody coatings and polyvinyl chloride plastisols and hot metal systems such as those described in our U.K. Patent Applications Nos. 8819652.2 and 8819653.0 (corresponding respectively to USSNs 395026 and 396047 and respectively to Japanese Applications Nos. 01/212867 and 01/212868 without an adverse effect on the viscosity of the coating medium

EP 0 405 879 B1

to enable better handling.

In addition there is a need to provide a solution of basic calcium sulphonate in a volatile solvent which may be used in anticorrosion coatings which are quicker drying and which may be used in wax based anticorrosion coatings.

There is also a need for a calcium sulphonate composition which is directly compatible with polyvinyl chloride plastisols.

United States Patent No. 4780224 which is an improvement of United States Patent No. 4604219 describes a method for producing overbased amorphous calcium sulphonates for use as lubricating oil additives. It is notable that whilst the claims of the patent require the presence of oil and oil is an essential ingredient in Table II, oil is not explicitly mentioned in the Examples. Calculations show however that additional ingredients were used which would be oil given the proposed use as a lubricant additive.

We have now developed a process which may be used for the production of solid calcium sulphonate or a dispersion thereof in a carrier, for example, a volatile solvent or a plasticizer useful in anticorrosion coatings.

The present invention therefore provides a process for the preparation of basic calcium sulphonate comprising:

(a) forming a substantially oil free mixture of a sulphonic acid and/or an alkaline earth metal sulphonate, a hydrocarbon solvent, an alcohol containing from 1 to 5 carbon atoms and an excess relative to the acid of calcium oxide or calcium hydroxide, where calcium oxide is used water being added,

(b) carbonating the mixture at a temperature of at most 60°C, and advantageously at most 35°C,

(c) removing residual alcohol,

(d) optionally adding the medium, other than oil, in which it is desired to obtain the basic calcium sulphonate,

(e) removing the hydrocarbon solvent used in step (a) above, and

(f) optionally removing any water present.

The choice of medium added in step (d) enables solid calcium carbonate to be obtained by adding no medium, a dispersion in a volatile solvent by adding the appropriate solvent, or a suspension in a plasticizer by adding a plasticizer to provide a composition compatible with polyvinyl chloride plastisols. A lubricant may be obtained by adding a lubricating medium such, for example, as a synthetic ester or fatty acid ester to enable use of the calcium sulphonate as an extreme pressure and antiwear additive for metal working fluids.

The use of the specified reaction conditions also enables the production of amorphous calcium sulphonate which forms Newtonian colloids in solution, which are especially useful in anticorrosion and anit-rust coatings.

The present invention also provides a calcium carbonate-containing solid basic calcium sulphonate, in which the calcium carbonate is in the amorphous form.

The invention further provides a dispersion in a volatile organic solvent of a calcium carbonate-containing basic calcium sulphonate in which the calcium carbonate is in the amorphous form, the dispersion preferably containing 70 to 85 wt% of the basic calcium sulphonate.

The invention further provides a dispersion in a plasticizer of a carbonate-containing basic calcium sulphonate in which the calcium sulphonate is in the amorphous form, the dispersion preferably containing from 70 to 85 wt% of the basic calcium sulphonate.

The invention still further provides the use of the compositions of the invention, or of the products of the processes of the invention, as components of an anticorrosion coating, and a metal having such a coating thereon.

The compositions of the present invention are substantially free from oil and the processes for their manufacture do not involve the use of oil as such. There may however, be some small amounts of oil present particularly that derived from the sulphonic acids which, as a result of their manufacture, may contain oil including unsulphonated oil products. This is generally no greater than 30 wt%, and preferably less than 20 wt%, of the sulphonic acid.

While we have used the term calcium carbonate, although carbonate is the predominant anion, traces of other anions, e.g., hydroxide, oxide, and alkoxide, may be present. This is a result of many processes for preparing dispersions of calcium carbonates involving carbonation of calcium hydroxide, oxide or alkoxide. Calcium carbonate exists essentially in four forms, amorphous, aragonite, vaterite and calcite. The presence of the various forms may be determined by infra red analysis the absorbance being calcite 884 $cm^{-1}$, vaterite 879 $cm^{-1}$, amorphous 860 $cm^{-1}$. We have found that in order to have the desired properties our products and compositions should contain calcium carbonate substantially free of absorbance at 884 $cm^{-1}$, unlike the commercial thixotropic calcium sulphonates traditionally used in metal protection coatings.

The term "sulphonic acid or sulphonate", as used herein, refers generally to those sulphonates wherein the hydrocarbon portion of the molecule has a molecular weight in the range of about 300 to about 1,200. Preferably, for calcium sulphonate where one molecule contains sulphonate groups, this molecular weight is in

3

the range of about 900 to about 1,100. These sulphonic acids or sulphonates may be either synthetic sulphonates or the so-called mahogany or natural sulphonates. The term "synthetic sulphonates" refers to those sulphonates which are derived from sulphonation feedstocks which are prepared synthetically. The synthetic sulphonates include alkyl sulphonates and alkaryl sulphonates. The alkaryl radical can be derived from benzene, toluene, ethyl benzene, xylene isomers, or naphthalene. Preferably, the alkyl groups are branched chain. Mixtures of sulphonates derived from alkaryl hydrocarbons having straight-chain alkyl groups and alkaryl hydrocarbons having branched-chain alkyl groups are particularly useful.

An example of still another synthetic alkaryl sulphonate, which is particularly useful for preparing colloidal dispersions, is the sulphonate derived from a sulphonation feedstock known as "NAB Bottoms". NAB Bottoms are predominantly di-n-alkyl, wherein the alkyl groups contain from eight to 18 carbon atoms. They are distinguished from the preceding sulphonation feedstocks primarily in that they are straight-chain and contain a large amount of di-substituted material.

Other sulphonates which can be used include, for example, mono- and poly-wax substituted naphthalene sulphonates, dinonyl naphthalene sulphonates, naphthalene disulphide sulphonates, dicetyl thianthrene sulphonates, dilauryl β-naphthol sulphonates, unsaturated paraffin wax sulphonates, hydroxy substituted paraffin wax sulphonates, cyclo-aliphatic sulphonates, such as lauryl-cyclohexyl sulphonates, and mono-and poly-wax substituted cyclohexyl sulphonates.

We have found that in order to obtain a composition applicable at high solids the calcium carbonate in the basic calcium sulphonate should be of an amorphous type with low crystallinity. This morphology of the carbonate also contributes to the low temperature (i.e. below 40°C) fluidity of compositions in which the product is used, retention of adhesion to metal when incorporated into wax and polymer based coatings and enhances the ability to retain adhesion under stress at temperatures from -40°C to 120°C.

In a preferred process we first charge methanol and then the hydrocarbon solvent is added to the reactor and mixed with the calcium hydroxide/methanol suspension maintaining the temperature constant. Sulphonic acid is then slowly charged to the reactor whose temperature is advantageously adjusted in the range of 20 to 30°C.

The product is then carbonated, advantageously at 20 to 30°C. The reaction heat is 28.3 Kcal/mole of $CO_2$. The total quantity of carbon dioxide should be injected at a constant feed rate in a minimum of time (3-4 hours). Typically a carbonation time of 4 hours is optimum.

Carbonation is continued until about 80% preferably from 85-90 wt% of the stoichiometric quantity of $CO_2$ has been absorbed. $CO_2$ injection should be stopped at this point. When the carbonation is completed, the reactor should be heated to reach 60°C in about one hour.

When the majority of the methanol has been removed the medium in which is is desired to obtain the basic calcium sulphonate is gradually introduced. During this period removal of methanol and the hydrocarbon continues.

The overbased calcium sulphonate may be produced in solid form, e.g., pellets, flakes, prills or powder. The key advantages of this product are low solvent content and easy handling. This overbased calcium sulphonate in solid form may be dispersed in different types of solvent (oil, aromatic-naphthenic-aliphatic solvent) while keeping the colloidal structure of the overbased sulphonate. It is important not to overheat the product (i.e. not above 180°C) during drying since this alters its structure which will adversely affect its subsequent use.

The basic calcium sulphonate of this invention may be used in coating compositions such, for example, as wax based coatings and in polymer based anticorrosion coatings for metal where the basic calcium sulphonate contributes to the adhesion of the coating to metal. These improved corrosion inhibiting coating formulations may be applied as hot melts to be used mainly in automotive cavity and underbody protection. These coatings meet automotive industry requirements by combining non-thixotropic, volatile-free overbased sulphonate, and natural resin, natural or synthetic waxes or polymers.

The term polymer as used herein includes certain copolymers which meet the specified requirements. Suitable polymers for use in coating compositions together with the calcium sulphonate of this invention are described in our U.K. Patent Application No. 8819653.0 and its equivalents mentioned above.

The preferred relative amounts of polymer and calcium sulphonate are

|  | Parts by Weight | |
| --- | --- | --- |
|  | Polymer | Calcium Sulphonate |
| Preferred | 0.1 to 25 | 75 to 99.9 |
| Most Preferred | 0.2 to 10 | 90 to 99.8 |

No particular technique is required to prepare the blend of polymer and the calcium sulphonate. This is particularly true since usually the amount of polymerr used is relatively small. After adding the required amount of polymer to the calcium sulphonate, preferably slowly in incremental amounts, the admixture is stirred sufficiently to provide a homogenous comoposition.

These compositions may be applied "as is" to the metal surface, usually by means of a brush. Preferably, the composition is diluted in a volatile solvent for application to the surface. The use of a volatile solvent provides a more uniform film on the metal surface and enables the use of a spray. The latter substantially reduces the cost of applying the composition.

The nature of the volatile solvent used is not a salient feature of the invention, and it is believed those skilled in the art, without undue experimentation, can readily ascertain suitable solvents. Examples of suitable solvents include volatile hydrocarbon solvents, such for example as Stoddard solvent, kerosene, and petroleum naphtha. Also, certain nonflammable chloro-hydrocarbons are suitable. For safety, it is preferable to use solvents having a flash point of at least 37°C and even higher. The amount of solvent is dependent on the particular method of application. We have found that the use of the particular solvents described allows production of a high solids content solution of viscosity such that it may be readily applied to the metal.

We have found that polymer blends, especially those containing an ethylene/vinyl acetate/acrylic acid terpolymer, containing the compositions of our invention may be dissolved in conventional solvents to provide solutions containing greater than 60 wt% solids, typically 60 to 70 wt% solids, and these solutions may be applied by conventional techniques to provide effective anti-corrosion and chip protection for metals and such a use is part of the present invention as are metals coated with the composition. It is believed that the polymer provides high adhesion to the metal, and high strength to the coating combined with flexibility and resistance to chipping. The calcium sulphonate, on the other hand, provides anticorrosive properties to the coating and is miscible with the terpolymer. A solution of the composition may be obtained at low solvent levels, less than 30% solvent, possibly less than 20%, which solution does not alter significantly in viscosity after recovery from temperature cycling from -20°C + 20°C.

The viscosity and flexibility of the compositions of the present invention, their adhesion to metal, their hardness and thus resistance to chipping may be controlled by the inclusion of other components in the composition such, for example, as petroleum and terpene resins, soaps which may or may not be metal, especially calcium, salts of oxidized paraffinic oils, alkenyl succinic anhydrides and rosin esters. The properties of the composition may also be controlled by chemical means such for example as cross-linking, e.g., with peroxides, amines or anhydrides.

When the basic calcium sulphonate of the present invention is dispersed in a plasticizer the dispersion may be blended with polyvinyl chloride plastisols and applied as anticorrosion coatings particularly as car underbody coatings. Any of the plasticizers typically used in polyvinyl chloride plastisols may be used such, for example, as phthalates, including alkyl phthalates such as dioctyl phthalates and dinonyl phthalates, adipates and pyromellitates. These compositions are improved plastisol compositions obtained by combining non-thixotropic, high non-volatile content overbased calcium sulphonate dispersed in plasticizer with polyvinyl chloride, plasticizer, fillers and one or more other ingredients.

The solid basic calcium sulphonates of the present invention have the added advantage that they may be powdered or granulated and readily transported whatever their ultimate use. They may be dissolved and/or emulsified in lubricant systems including water based systems for metal working where they will impart extreme pressure and antiwear properties.

The present invention is illustrated by the following Examples.

Example 1

This Example shows the preparation of overbased calcium sulphonate for use in corrosion-inhibiting coating.

To a stirred mixture of 276 g of calcium oxide in 585 g of toluene, there is added 494 g of an alkyl (alkyl chain - a mixture of about 75% $C_{24}$ branched and 25% $C_{18}$ linear alkyl groups) benzene sulphonic acid over a

EP 0 405 879 B1

period of 0.5 hours at room temperature. To this mixture, there are added 585 g of methanol and 17.5 g of water. The mixture is then blown with 126 g of carbon dioxide for 4 hours at a temperature close to 28°C. The mixture is then heated to 68°C over 2.5 hours to complete the reaction and remove methanol, before adding 200 g of EXXSOL∗ D 40, an aliphatic hydrocarbon solvent. The resulting mixture is heated to 140-150°C for one hour to remove toluene and water before filtration.

The resulting product is a solution of basic calcium sulphonate in EXXSOL D 40. The product was used as an improved corrosion-inhibiting coating composition to produce a firm or hard non-oily, or essentially non-oily, permanent rust preventive coating on metal with a passing sag resistance at 160°C for 100 and 200 μm thickness wet and dry.

A formulation including a reference wax (2 parts in mass) blended at 60 to 80°C with the overbased calcium sulphonate (1 part equivalent in dry product) was prepared by stirring with Exxsol D40 to get good sprayability, and applied to a 60 μm dry film thickness.

The results in the salt spray anti-corrosion test (ASTM B117) compared with the wax alone were as follows:

Wax Alone                    400 hours
Wax/Sulphonate Blend >       750 hours.

Example 2

The procedure of Example 1 is repeated except that 300 g of plasticizer (JAYFLEX∗ DIUP or DINP) is used as medium to replace Exxsol D40.

Improved plastisols of the following formulations F1 to F5 were evaluated:

| Component | Standard | F1 | F2 | F3 | F4 | F5 |
|---|---|---|---|---|---|---|
| 1 PVC | 100 | 100 | 100 | 160 | 100 | 100 |
| 2 DINP (plasticizer) | 170 | 170 | 120 | 170 | 170 | 170 |
| 3 $CaCO_3$ (standard grade) | 80 | 0 | 0 | 0 | 0 | 9 |
| 4 $CaCO_3$ (precipitated) | 20 | 0 | 0 | 0 | 9 | 0 |
| 5 overbased sulphonate in DINP | 0 | 100 | 100 | 100 | 100 | 100 |

Evaluation of these formulations demonstrated that overbased calcium sulphonate dispersed in plasticizer:
- shows a good compatibility with emulsion grade pvc and plasticizer
- has a softening effect on the fused polymer that allows reduction of plastisol curing temperature
- allows rapid dispersion of low cost ground calcium carbonate, instead of using high cost precipitated calcium carbonate
- shows an improvement of plastisols in anticorrosion performances.

Example 3

Solid overbased calcium sulphonate is prepared directly from Example 1 after filtration or from a similar procedure except that the medium is replaced by a solvent easily recovered from the mass of the filtered product. The solid is obtained by thin-evaporation, vacuum, or spray drying techniques.

This overbased calcium sulphonate is produced in solid form as powder, pellets, flakes, or prills. The key

∗Trade Marks

6

advantages are zero solvent content, easy handling and the dispersibility of product in different types of solvent (oil, aromatic/naphthenic/aliphatic solvent) while keeping the colloidal structure of the overbased sulphonate.

The solid overbased calcium sulphonate was found to impart improved mechanical properties (mainly on sag resistance, mechanical adhesion, cohesion) and on anti-corrosion performance when used in an anti-corrosion coating.

## Claims

1. A process for the preparation of basic calcium sulphonate comprising:
   (a) forming a substantially oil free mixture of a sulphonic acid and/or an alkaline earth metal sulphonate, a hydrocarbon solvent, an alcohol containing from 1 to 5 carbon atoms and an excess relative to the acid of calcium oxide or calcium hydroxide, water being added when the oxide is used,
   (b) carbonating the mixture at a temperature of at most 60°C,
   (c) removing residual alcohol,
   (d) optionally adding the medium, other than oil, in which it is desired to obtain the basic calcium sulphonate,
   (e) removing the hydrocarbon solvent used in step (a) above and,
   (f) optionally, removing any water present.

2. A process according to claim 1 in which the medium is a plasticizer.

3. A process according to claim 1 in which the medium is a lubricant.

4. A process according to any one of claims 1 to 3, in which step (b) is carried out at a temperature of at most 35°C.

5. A calcium carbonate-containing solid basic calcium sulphonate, the calcium carbonate being in amorphous form.

6. A dispersion in a volatile organic solvent of the basic calcium sulphonate of claim 5, the dispersion preferably containing 70 to 85 wt% of the basic calcium sulphonate.

7. A dispersion in a plasticizer of the basic calcium sulphonate of claim 5, the dispersion preferably containing from 70 to 85 wt% of the basic calcium sulphonate.

8. The use of a basic calcium sulphonate as claimed in any one of claims 5 to 7, or of a basic calcium sulphonate produced by the process of any one of claims 1 to 4, as a component of an anticorrosion coating.

9. A metal having on a surface thereof a coating derived from the basic calcium sulphonate claimed in any one of claims 5 to 7 or from the basic calcium sulphonate produced by the process of any one of claims 1 to 4.

## Patentansprüche

1. Verfahren zur Herstellung von basischem Calciumsulfonat, bei dem
   (a) eine im wesentlichen ölfreie Mischung aus einer Sulfonsäure und/oder einem Erdalkalimetallsulfonat, einem Kohlenwasserstofflösungsmittel, einem Alkohol mit 1 bis 5 Kohlenstoffatomen und einem Überschuß relativ zu der Säure an Calciumoxid oder Calciumhydroxid gebildet wird, wobei Wasser zugesetzt wird, wenn das Oxid verwendet wird,
   (b) die Mischung bei einer Temperatur von höchstens 60°C mit Kohlendioxid behandelt wird,
   (c) restlicher Alkohol entfernt wird,
   (d) gegebenenfalls das von Öl verschiedene Medium zugegeben wird, in dem das basische Calciumsulfonat erhalten werden soll,
   (e) das in Stufe (a) verwendete Kohlenwasserstofflösungsmittel entfernt wird, und
   (f) gegebenenfalls alles vorhandene Wasser entfernt wird.

2. Verfahren nach Anspruch 1, bei dem das Medium ein Weichmacher ist.

**3.** Verfahren nach Anspruch 1, bei dem das Medium ein Schmierstoff ist.

**4.** Verfahren nach einem der Ansprüche 1 bis 3, bei dem Stufe (b) bei einer Temperatur von höchstens 35°C durchgeführt wird.

**5.** Calciumcarbonat enthaltendes, festes, basisches Calciumsulfonat, wobei das Calciumcarbonat in amorpher Form vorliegt.

**6.** Dispersion des basischen Calciumsulfonats aus Anspruch 5 in einem flüchtigen organischen Lösungsmittel, wobei die Dispersion vorzugsweise 70 bis 85 Gew.% des basischen Calciumsulfonats enthält.

**7.** Dispersion des basischen Calciumsulfonats aus Anspruch 5 in einem Weichmacher, wobei die Dispersion vorzugsweise 70 bis 85 Gew.% des basischen Calciumsulfonats enthält.

**8.** Verwendung eines basischen Calciumsulfonats nach einem der Ansprüche 5 bis 7 oder eines nach dem Verfahren gemäß einem der Ansprüche 1 bis 4 hergestellten basischen Calciumsulfonats als Komponente einer Antikorrosionsbeschichtung.

**9.** Metall, das auf seiner Oberfläche eine Beschichtung aufweist, die aus dem basischen Calciumsulfonat gemäß einem der Ansprüche 5 bis 7 oder aus einem nach dem Verfahren gemäß einem der Ansprüche hergestellten basischen Calciumsulfonat stammt.

## Revendications

**1.** Procédé de préparation d'un sulfonate de calcium basique, comprenant :
   (a) la formation d'un mélange, pratiquement dépourvu d'huile, d'un acide sulfonique et/ou d'un sulfonate de métal alcalino-terreux, d'un solvant hydrocarboné, d'un alcool contenant 1 à 5 atomes de carbone et d'un excès, par rapport à l'acide, d'oxyde de calcium ou d'hydroxyde de calcium, de l'eau étant ajoutée lorsque l'oxyde est utilisé ;
   (b) la carbonatation du mélange à une température d'au plus 60°C,
   (c) l'élimination de l'alcool résiduel,
   (d) facultativement, l'addition du milieu, autre qu'une huile, dans lequel il est désiré d'obtenir le sulfonate de calcium basique,
   (e) l'élimination du solvant hydrocarboné utilisé dans l'étape (a) ci-dessus, et
   (f) facultativement, l'élimination de toute quantité d'eau présente.

**2.** Procédé suivant la revendication 1, dans lequel le milieu est un plastifiant.

**3.** Procédé suivant la revendication 1, dans lequel le milieu est un lubrifiant.

**4.** Procédé suivant l'une quelconque des revendications 1 à 3, dans lequel l'étape (b) est mise en oeuvre à une température d'au plus 35°C.

**5.** Sulfonate de calcium basique solide contenant du carbonate de calcium, le carbonate de calcium étant sous forme amorphe.

**6.** Dispersion, dans un solvant organique volatil, du sulfonate de calcium basique suivant la revendication 5, la dispersion contenant de préférence 70 à 85 % en poids du sulfonate de calcium basique.

**7.** Dispersion, dans un plastifiant, du sulfonate de calcium basique suivant la revendication 5, la dispersion contenant de préférence 70 à 85 % en poids du sulfonate de calcium basique.

**8.** Utilisation d'un sulfonate de calcium basique suivant l'une quelconque des revendications 5 à 7, ou d'un sulfonate de calcium basique produit par le procédé suivant l'une quelconque des revendications 1 à 4, comme constituant d'un revêtement anti-corrosion.

**9.** Métal portant sur une de ses surfaces un revêtement dérivé du sulfonate de calcium basique suivant l'une quelconque des revendications 5 à 7 ou du sulfonate de calcium basique produit par le procédé suivant l'une quelconque des revendications 1 à 4.